# EUROPÄISCHE PATENTANMELDUNG

(11) **EP 4 663 372 A1**
(43) Veröffentlichungstag der Anmeldung: **17.12.2025**
(21) Anmeldenummer: 25181289.7
(22) Anmeldetag: 06.06.2025
(51) Int. Cl.: B29C 33/62, B29C 37/00, C08K 5/20, C08K 5/098, C08L 71/02

(54) **PROZESSHILFSMITTEL, FORMULIERUNG ZU DESSEN HERSTELLUNG SOWIE DESSEN VERWENDUNG**

(30) Priorität: 07.06.2024 DE 102024115979; 10.09.2024 US 202418829510
(71) Anmelder: Devinochem GmbH & Co. KG, 65201 Wiesbaden (DE)
(72) Erfinder: BARBE, Christian J., 65201 Wiesbaden (DE); ROTH, Florian, 65388 Schlangenbad (DE); GABEL, Falk, 65388 Schlangenbad (DE)
(74) Vertreter: Blumbach · Zinngrebe Patentanwälte PartG mbB

(57) **Zusammenfassung**

Die Erfindung betrifft allgemein Prozesshilfsmittel, insbesondere für die Herstellung von Produkten aus oder umfassend Gummimischungen und/oder sonstige organische Polymere, beispielsweise für die Herstellung sogenannter Elastomere. Im Speziellen betrifft die Erfindung ein Prozesshilfsmittel, welches eine gute Entformungs- bzw. Trennwirkung von erzeugten Produkten aus oder umfassend Gummimischungen und/oder sonstige Polymere ermöglicht und dabei eine verbesserte Applikation, insbesondere unter Sicherheitsaspekten, ermöglicht. Die Offenbarung betrifft dabei allgemein eine Formulierung, aus welcher ein Prozesshilfsmittel herstellbar ist, und welches insbesondere eine weitestgehend staubfreie oder zumindest staubarme Handhabung des Prozesshilfsmittels für den Endanwender erleichtert, ein Verfahren zur Herstellung der Formulierung sowie ein Verfahren zur Herstellung des Prozesshilfsmittels und ein solcherart hergestelltes oder zumindest herstellbares Prozesshilfsmittel.

## Beschreibung

### Gebiet der Erfindung

Die Erfindung betrifft allgemein Prozesshilfsmittel, insbesondere für die Herstellung von Produkten aus oder umfassend Gummimischungen und/oder sonstige organische Polymere, beispielsweise für die Herstellung sogenannter Elastomere. Im Speziellen betrifft die Erfindung ein Prozesshilfsmittel, welches eine gute Entformungs- bzw. Trennwirkung von erzeugten Produkten aus oder umfassend Gummimischungen und/oder sonstige Polymere ermöglicht und dabei eine verbesserte Applikation, insbesondere unter Sicherheitsaspekten, ermöglicht. Die Offenbarung betrifft dabei allgemein eine Formulierung, aus welcher ein Prozesshilfsmittel herstellbar ist, und welches insbesondere eine weitestgehend staubfreie oder zumindest staubarme Handhabung des Prozesshilfsmittels für den Endanwender erleichtert, ein Verfahren zur Herstellung der Formulierung sowie ein Verfahren zur Herstellung des Prozesshilfsmittels und ein solcherart hergestelltes oder zumindest herstellbares Prozesshilfsmittel.

Unter einer Formulierung wird dabei im Sinne der vorliegenden Offenbarung die Vorstufe eines Prozesshilfsmittels verstanden, die durch die Zugabe beispielsweise von Wasser in eine anwendungskonforme Darreichungsform, und damit das Prozesshilfsmittel, überführt wird. D.h. die Formulierung kann in Form von Pulver, Granulaten, oder mit einer Gel- oder Pasten-artiger Konsistenz, die aber vorzugsweise noch fließ- und/oder pumpfähig ist, vorliegen. Prozesshilfsmittel mit einem bestimmten funktionalen Charakter können entsprechend dieser Funktion auch als Trennmittel, Schmiermittel, Gleitmittel, Anti-Haft-Mittel, Entformungsmittel, Produkttrennmittel oder ähnlich bezeichnet werden. Diese Begriffe beschreiben Prozesshilfsmittel, die in anwendungsfertiger Darreichungsform vorliegen.

Im Rahmen der vorliegenden Offenbarung wird unter einem Pulver eine Darreichungsform verstanden, die im Wesentlichen aus Partikeln gebildet ist, wobei Partikel auch Aggregate und Agglomerate umfassen. Als Pulverkomponente werden anorganische Phasen sowie organische Phasen oder Gemische aus organischen und anorganischen Phasen bezeichnet, die vorzugsweise in partikulärer Form vorliegen.

### Hintergrund der Erfindung

Wie ausgeführt betrifft die vorliegende Offenbarung allgemein eine Formulierung für die Herstellung eines Prozesshilfsmittels, welches beispielsweise als Entformungs- oder Trennmittel verwendet werden kann, sowie ein aus dieser Formulierung hergestelltes oder herstellbares Prozesshilfsmittel. Das Prozesshilfsmittel nach der Offenbarung kann beispielsweise in der Form einer Beschichtung, welche wie ein Trennmittel wirkt, verwendet werden, wobei hierbei unter einem Trennmittel verstanden wird, dass dies die Wirkung hat, aneinanderliegende Materialien trennbar zu halten. Mit anderen Worten kann das Prozesshilfsmittel in diesem Fall als ein Mittel mit schmiermittelartigen Eigenschaften verstanden und auch allgemein als Schmiermittel verstanden werden. Schmiermittel, oder synonym Schmierstoffe allgemein werden zur Schmierung eingesetzt und dienen zur Verringerung von Verklebung bzw. der Adhäsion von Oberflächen aneinander, nachfolgend auch als Anhaften bezeichnet, aber auch zur Verminderung von Reibung und Verschleiß sowie auch, beispielsweise durch die Verminderung von Reibungswärme, zur Kühlung. Das Prozesshilfsmittel kann auch als Formtrennmittel ausgestaltet sein, also als Prozesshilfsmittel, welches das Anhaften von Guss- und/oder Formteilen an der Form oder allgemein einem Werkstoff, welcher beim Abformprozess zum Einsatz kommt, verhindert oder zumindest reduziert oder vermindert. Weiterhin kann das Prozesshilfsmittel nach der vorliegenden Offenbarung auch als Gleitmittel wirken oder zum Einsatz kommen, worunter insbesondere verstanden wird, dass es eine Trennwirkung zwischen heißen Oberflächen bzw. Stoffen aufweist, beispielsweise verhindert, dass eine Polymerschmelze an einer heißen Metalloberfläche, beispielsweise der Oberfläche einer Form oder eines Werkzeugs, anhaftet. Das Prozesshilfsmittel kann aber allgemein auch als Produkttrennmittel wirken, beispielsweise als das Verkleben von Schüttgut, Granulaten und/oder weiteren Vorformen eines Endproduktes, insbesondere eines polymerischen Endproduktes, verhinderndes Produkttrennmittel. Allgemein werden diese vorstehenden und nicht ausschließenden speziellen Ausführungen im Rahmen der vorliegenden Offenbarung unter dem Begriff des Prozesshilfsmittels subsumiert, wobei es sich insbesondere um ein eine Trennwirkung aufweisendes Prozesshilfsmittels handeln kann, worunter allgemein auch ein Produkttrennmittel hier unter dem allgemeinen Oberbegriff des Prozesshilfsmittels, insbesondere des eine Trennwirkung aufweisenden Prozesshilfsmittels, verstanden wird.

Als spezielle Ausführung eines Prozesshilfsmittels im Sinne der vorliegenden Offenbarung kann das Entformungsmittel (synonym: Trennmittel) verstanden werden. Das Prozesshilfsmittel der Offenbarung kann beispielhaft als Prozesshilfsmittel bei der Herstellung von Produkten aus oder umfassend Gummimischungen und/oder aus oder umfassend sonstige(n) organische(n) Polymere(n) verwendet werden. Als Entformungsmittel ausgestaltete Prozesshilfsmittel sind beispielsweise Mittel, welche auf die Oberfläche des erzeugten Produkts aus oder umfassend eine Gummimischung und/oder aus oder umfassend ein Polymer oder auf eine Form, die zur Erzeugung des Produkts verwendet wird, aufgebracht werden. Der aus dem Prozesshilfsmittel aufgebrachte Film wird allgemein Trennmittelfilm genannt. Im Rahmen der vorliegenden Offenbarung kann dieser aufgebrachte Film auch als Beschichtung oder Schicht bezeichnet und/oder verstanden werden. Der Zweck des Prozesshilfsmittels, beispielsweise des Entformungs- bzw. Trennmittels ist es, zu verhindern, dass das erzeugte Produkt an der Form und/oder an einem anderen, gleichartigen Produkt anhaftet. Möglich ist auch, dass das Produkt die Form eines langen Bandes aufweist, welches zum Lagern gestapelt oder gerollt wird, wobei die unterschiedlichen Lagen des Materials ebenfalls nicht aneinanderhaften sollen. Diese spezielle Ausführung wird hier beispielhaft genannt und stellt eine häufige Ausführungsform bzw. Anwendung des Prozesshilfsmittels nach der Offenbarung dar, sodass viele Eigenschaften des Prozesshilfsmittels nachfolgend anhand dieser speziellen Ausführungsform des Entformungs- bzw. Trennmittels beschrieben sind. Die Anwendung des Prozesshilfsmittels ist aber keinesfalls auf diese genannte Anwendung beschränkt, sondern, wie vorstehend auch ausführlich ausgeführt, kann es auch in weiteren Bereichen angewendet werden.

Zweckmäßig umfassen bekannte Prozesshilfsmittel, insbesondere eine Trennwirkung aufweisende Prozesshilfsmittel, des Standes der Technik dafür ein Mittel, welches auf die Oberfläche entweder der Form oder des Produkts selbst oder gegebenenfalls auf beide aufgebracht werden und dort als ein Trennkörper oder auch Abstandshalter wirken kann, in der Verwendung des Prozesshilfsmittels als Entformungs- bzw. Trennmittel also den direkten Kontakt des Produktes mit einem anderen Produkt, sich selbst und/oder der Form verhindert. Als "direkter Kontakt" wird im Rahmen der vorliegenden Offenbarung der physische Kontakt zwischen der Oberfläche des Produkts und einer anderen Oberfläche, beispielsweise der einer Form oder einer anderen Stelle des Produkts (beispielsweise einem anderen Teil einer Polymerbahn), verstanden, also vereinfacht gesagt das Berühren von unterschiedlichen Oberflächen.

Dies kann beispielsweise der Fall sein, indem ein Film aus oder umfassend das Prozesshilfsmittel nach der Offenbarung auf wenigstens eine der in Rede stehenden Oberflächen aufgebracht ist. Allerdings ist es nicht zwingend erforderlich, dass das Prozesshilfsmittel in Form einer Beschichtung und/oder eines Films auf wenigstens eine Oberfläche aufgebracht ist, sondern es kann beispielsweise auch in Pulverform auf die Oberfläche aufgebracht sein. Es kann auch möglich sein, dass das Prozesshilfsmittel in das Material einer der Oberflächen eingebracht ist, beispielsweise also in das polymerische Material eingebracht ist. Die Wirkung des Prozesshilfsmittels, gleich in welcher Form es angewendet wird, soll ein Verkleben der Oberflächen verhindern. Als Mechanismus wird allgemein angenommen, dass wenigstens eine Komponente des Prozesshilfsmittels als ein Abstandshalter oder Trennkörper wirkt, welcher eine physikalische und/oder chemische Bindung zwischen der Oberfläche des erzeugten Produkts und anderen Oberflächen, welche mit dem Produkt in Kontakt kommen, verhindert oder zumindest erschwert.

Die Produkte aus oder umfassend Gummimischungen und/oder sonstige Polymere, wie beispielsweise Elastomere, entstehen in bekannten Produktionsprozessen, beispielsweise durch Vulkanisation. In der Regel werden zunächst lange Bahnen aus solchen Polymeren, beispielsweise aus Elastomeren, als Halbzeuge hergestellt, welche in nachfolgenden Prozessen dann in die eigentlichen Produkte, beispielsweise Reifen, geformt werden. Es ist auch möglich, dass solche Polymere auch als Pellets und/oder Granulate verarbeitet werden können. Im Rahmen der vorliegenden Offenbarung kann eine Bahn eines Polymers auch als Band oder Fell bezeichnet werden, wobei sich der Begriff der "Bahn" oder des "Bandes" allgemein auf die Form des Polymers bezieht, d.h. also allgemein darauf, dass das Polymer die Form eines dünnen, langen Körpers aufweist, bei dem die Dicke wenigstens eine Größenordnung kleiner ist als Länge oder Breite. Weiterhin kann die Länge des Bandes größer sein als seine Breite. Die langen Bahnen werden als Stapel abgelagert, wobei sich die Oberflächen berühren. Weiterhin kommen in den Formprozessen die Oberflächen des erzeugten Polymerprodukts mit Formen in Berührung. Um ein Aneinanderhaften der Polymeroberflächen aneinander oder an einer Form zu vermeiden bzw. ein restloses Herauslösen des erzeugten Produktes aus oder umfassend Polymer und/oder eine Gummimischung aus der Form zu ermöglichen, werden Prozesshilfsmittel, beispielsweise ein Entformungs- bzw. Trennmittel, wie vorstehend beschrieben, benötigt. Beispielsweise kann vorgesehen sein, dass Prozesshilfsmittel in flüssiger Form auf die Form bzw. die Oberfläche des erzeugten Produkts aus oder umfassend eine Gummimischung und/oder ein Polymer aufzubringen, sodass sich ein Film aus Prozesshilfsmittel (allgemein auch als "Film mit Trennwirkung" oder kurz "Trennfilm" bezeichnet) auf der entsprechenden Oberfläche bildet. Dieser verhindert dann das Aneinanderhaften von Oberflächen. Dieser Film kann im Rahmen der vorliegenden Offenbarung auch beschrieben oder bezeichnet werden als eine Beschichtung oder eine Schicht oder ein Beschichtungsfilm.

Zweckmäßig umfassen daher wie ausgeführt Prozesshilfsmittel, welche eine Trennwirkung erzeugen, wenigstens ein Mittel, welches auf einer Oberfläche als Abstandshalter oder Trennkörper wirkt. Bekannt ist beispielsweise die "enthaftende" Wirkung beispielsweise bestimmter Pulverkomponenten, insbesondere von anorganischen Pulverkomponenten, bei denen es sich beispielsweise um ein Carbonat, wie CaCO₃ ("Kreide") oder ein Schichtsilikat, wie beispielsweise Talkum, oder ein Tonmineral oder ähnliche, dem Fachmann bekannte Schichtsilikate, handeln kann. Auch andere Mittel, insbesondere organische Mittel, wie Seifen, beispielsweise Metallseifen, können alternativ oder zusätzlich die Funktion eines "Trennkörpers" oder Abstandshalters übernehmen. Auf diese Weise wird die Ausbildung einer chemischen und/oder physikalischen Bindung zwischen den zu trennenden Oberflächen verhindert oder unterdrückt oder zumindest erschwert, sodass diese leicht voneinander zu trennen sind. Dabei ist bei diesen Mitteln, welche ein Trennwirkung zeigen, allgemein wichtig, dass diese bzw. die Komponenten der entsprechenden Mittel eine hohe Adhäsion oder auch Affinität zur Oberfläche des Substrates auch durch die Wechselwirkung mit den anderen Komponenten des Prozesshilfsmittels aufweisen. Dadurch hat der Trennfilm selber eine hohe Adhäsion zur Oberfläche aus oder umfassend das organische Polymer, während er im Falle eines Trennfilmzu-Trennfilm-Kontaktes eine sehr geringe Kohäsion aufweist. Im Rahmen der vorliegenden Offenbarung wurde der Begriff der Kohäsion an dieser Stelle deshalb gewählt, um zum Ausdruck zu bringen, dass es sich um einen Kontakt von Teilchen/Komponenten eines Stoffes, d.h. dem Trennmittel, handelt

Wichtig für solche Prozesshilfsmittel ist, dass diese als inertes Material vorliegen. Dies bedeutet im Rahmen der vorliegenden Anmeldung, dass diese Prozesshilfsmittel vorzugsweise, sofern sie mit der Oberfläche und/oder dem betreffenden Material, insbesondere also einem Polymer, reagieren, dies vorzugsweise nur in der Form geschieht, dass die physikalischen Eigenschaften des Materials, insbesondere des Polymers, nicht verändert werden. Sofern diese physikalischen Eigenschaften doch beeinflusst werden, geschieht dies nur in der Form, dass eine einfache Trennung beispielsweise eines Produkts aus einer Form sichergestellt ist und/oder das Anhaften von Oberflächen, beispielsweise von Polymeroberflächen, wie Gummioberflächen, aneinander verhindert werden kann. Mit anderen Worten beeinflusst das Prozesshilfsmittel vorzugsweise die physikalischen Eigenschaften des Materials, vorzugsweise des Polymers, insbesondere eines sogenannten "Gummis", mit welchem es in Kontakt tritt und/oder auf welche es aufgebracht ist und/oder in das es eingebaut ist, möglichst nur in der Form, dass die Oberflächeneigenschaften, insbesondere die Oberflächenenergie und/oder der Reibungskoeffizient, verändert werden, während andere Eigenschaften unverändert bleiben.

Die eine Trennwirkung aufweisenden Prozesshilfsmittel liegen meist in Form einer wässrigen Dispersion oder wässrigen Suspension, beispielsweise einer grobdispersen Dispersion oder einer feinen Suspension, vor bzw. werden als solche verwendet, beispielsweise, um einen entsprechenden Trennmittelfilm aufbringen zu können. Für Transportzwecke stellt sich hier die Frage, wie der Transport des Prozesshilfsmittels zweckmäßig erfolgen soll. Dies gilt insbesondere, aber nicht nur, sowohl für Formulierungen als auch für Prozesshilfsmittel aus oder umfassend Pulverkomponenten, insbesondere anorganische Pulverkomponenten. Allgemein ist es dabei sinnvoll, wenn der Anteil an Aktivsubstanz, d.h. der den Trennfilm bildendenden Substanz, für den Versand möglichst hoch ist, um beispielsweise CO₂ für den Transport von Nicht-Aktivsubstanz einzusparen. Daher kann man beispielsweise daran denken, Pulverkomponenten als solches zu versenden. Gerade anorganische Pulverkomponenten sind sehr stabil gegenüber Zersetzungsprozessen. Auf diese Weise kann daher im Prinzip ein Transport von 100% Aktivsubstanz gewährleistet werden, was, wie vorstehend beispielhaft dargestellt auch unter Umweltgesichtspunkten sinnvoll ist.

Nachteilig daran ist allerdings, dass auf diese Weise der Verwender des Prozesshilfsmittels gezwungen ist, Pulver selbst zu verarbeiten, was zu einer Staubbelastung von mit der Sache betrauten Mitarbeitern führen kann. Insbesondere bei silikatischen Pulvern kann dies kritisch sein, da hier lungengängige und mithin unter gesundheitlichen Gesichtspunkten bedenkliche Phasen umfasst sein können. Auch kann dies zur Förderung der Bildung von explosionsfähigen Gemischen beitragen (die in der Regel durch die sogenannte "MIE" (Minimum Ignition Energy) charakterisiert sind).

Eine Möglichkeit, diese Staubbelastung insbesondere während der Verarbeitung der Formulierung zu einem Prozesshilfsmittel zu verhindern, besteht in der Bereitstellung von flüssigen bzw. flüssigkeitsgebundenen Abmischungen, beispielsweise also dem bereits fertigen Prozesshilfsmittel selbst. Schwierig hieran ist nicht nur, dass eine Bereitstellung einer solchen Abmischung, in der Regel in Form einer Dispersion bzw. Suspension, schwierig sein kann, weil eine solche Dispersion bzw. Suspension inhärent stets zu Entmischungsphänomenen, wie beispielsweise einem Absetzen der Pulverkomponente und damit der Trennung zumindest eines Teils der flüssigen und der festen Komponenten (beispielsweise in der ungünstigsten Form sogar zur Ausbildung eines festen Bodensatzes) neigt, beispielsweise dem Absetzen und/oder der Segregation von Feststoffkomponenten. Selbst wenn eine solche Entmischung unter Transportbedingungen verhindert werden kann, beispielsweise durch geeignete Additive, bedeutet das Verschicken einer solchen Abmischung allerdings, dass eine große Menge von nicht aktiv zum Trennen der Oberflächen benötigte Substanz mit versendet werden muss. Dies ist insgesamt als sehr ungünstig zu betrachten. Darüber hinaus kann es nach dem Trocknen des Prozesshilfsmittels zu einer Staubbildung kommen, wenn sich beispielsweise Teile des Prozesshilfsmittels von der Oberfläche lösen.

Beispielsweise beschreibt die US-amerikanische Patentanmeldung US 2019/0161624 A1 eine Zusammensetzung eines Entformungs- bzw. Trennmittels, welche bis zu 86,5 Gew.-% Wasser umfasst. Das Entformungs- bzw. Trennmittel nach der US 2019/0161624 A1 verringert die Bildung von Staub durch das Entformungs- bzw. Trennmittel selbst.

Es besteht damit ein Bedarf an einer Formulierung und/oder zumindest einem Prozesshilfsmittel, welches mit einem hohen Gehalt an Aktivsubstanz versendet, angeboten und/oder geliefert werden kann und welches dennoch eine exzellente Oberflächentrennung ermöglicht. Gleichzeitig besteht ein Bedarf daran, die Benutzer- bzw. Anwendersicherheit zu erhöhen.

### Aufgabe der Erfindung

Die Aufgabe der Erfindung besteht in der Bereitstellung eines Prozesshilfsmittels und einer Formulierung, welches die vorgenannten Schwächen und/oder Grenzen des Standes der Technik überwindet oder zumindest teilweise mindert sowie an einem Verfahren zu dessen Herstellung.

### Zusammenfassung der Erfindung

Die Aufgabe der Erfindung wird gelöst durch den Gegenstand der unabhängigen Ansprüche. Bevorzugte und spezielle Ausführungsformen sind Bestandteile der abhängigen Ansprüche und der Beschreibung der vorliegenden Offenbarung.

Die Erfindung betrifft daher nach einem ersten Aspekt eine Formulierung, insbesondere eine Formulierung für ein Prozesshilfsmittel bzw. zum Herstellen eines Prozesshilfsmittels, wobei die Formulierung ein nichtionisches Tensid, vorzugsweise ein Alkoxylat, besonders bevorzugt ein Ethylen-Propylenblockpolymer, insbesondere vorzugsweise mit einer Molekülmasse von weniger als 100000 g/mol, bevorzugt weniger als 75000 g/mol, wobei eine bevorzugte Untergrenze der Molekülmasse bei 200 g/mol liegt, und eine Metallseife sowie vorzugsweise ein anionisches Tensid umfasst und nicht mehr als 10 Gew.-% Wasser umfasst, vorzugsweise höchstens 5 Gew.-% Wasser, vorzugsweise höchstens 3 Gew.-% Wasser, bezogen auf das Gesamtgewicht der Formulierung. Im Übrigen hat sich gezeigt, dass (Rest)wassergehalte oder Zusätze von Wasser als Komponente einer Formulierung im Bereich von mehr als 10 Gew.% bis 40 Gew.% sowohl die Fließ- als auch die Pumpfähigkeit negativ beeinflussen. Die Formulierung nach der Offenbarung wie vorstehend beschrieben kann im Rahmen der Offenbarung vereinfacht auch als "wasserfreie" Formulierung bezeichnet werden, wobei jedoch darunter verstanden wird, dass diese Formulierung dennoch Wasser umfassen kann, jedoch wie ausgeführt in den vorgenannten, engen Grenzen, bei welchen es sich um technisch nicht vermeidbare Wassergehalte, also um einen unvermeidlichen Nebenbestandteil handelt, bei welchem es sich beispielsweise auf adsorptiv gebundenes Wasser handeln kann, und/oder auch um Restwasser, das beispielsweise von allen oder wenigstens einem Teil der Ausgangsmaterialien, die von der Formulierung umfasst sind, handeln kann.

Unter einer Formulierung wird im Rahmen der vorliegenden Offenbarung ein Stoffgemisch verstanden. Insbesondere kann dieses Stoffgemisch dafür geeignet oder ausgelegt sein, durch Zugabe weiterer Komponenten, beispielsweise beim Endanwender, in ein verbrauchsfertiges Produkt überführt zu werden. Die Formulierung stellt also hier eine Art chemisches Pendant zu einem sogenannten "Halbzeug" dar.

Die Formulierung nach der vorliegenden Offenbarung weist eine Reihe von Vorteilen gegenüber dem Stand der Technik auf. Insbesondere handelt es sich hier um eine Formulierung, welche vorzugsweise lediglich durch Zugabe von Wasser in ein Prozesshilfsmittel überführt werden kann.

Vorteilhaft ist insbesondere, dass die Formulierung nach der Offenbarung bis auf unvermeidliche Mengen von Restwasser, welche üblicherweise höchstens 10, Gew.-% vorzugsweise höchstens 5 Gew.-%, bezogen auf das Gesamtgewicht der Formulierung, betragen, und vorzugsweise noch niedriger sein können, beispielsweise höchstens lediglich 3 Gew.-%, bezogen auf das Gesamtgewicht der Formulierung, nur Aktivsubstanz umfasst, welche zur Bildung des Trennfilms auf den zu trennenden Oberflächen beiträgt. Der Transport unnötiger Bestandteile wird damit vermieden, was unter Umweltgesichtsgesichtspunkten vorteilhaft ist. Zudem ist die Formulierung so ausgelegt, dass sie beim Endanwender leicht, vorzugsweise lediglich durch Zugabe von Wasser, in ein Prozesshilfsmittel überführt werden kann, wobei der Endanwender selbst die Aktivsubstanz-Konzentration und damit die Viskosität des Prozesshilfsmittels entsprechend an seine eigenen Prozesse und Anlagen einstellen kann. Dabei wird durch die spezielle Ausgestaltung der Formulierung als wasserfreie und gleichzeitig auch staubfreie Formulierung mit einem sehr hohen Gehalt an Aktivsubstanz, der wie ausgeführt mindestens 90 Gew.-% beträgt und vorzugsweise noch höher sein kann, beispielsweise 97 Gew.-% oder noch mehr, auch der Anwendersicherheit Rechnung getragen wird, da beispielsweise die Staubbelastung von Mitarbeitern auf diese Weise möglichst geringgehalten werden kann. Im optimalen Fall kann die Staubbelastung durch das Prozesshilfsmittel bzw. die Formulierung selbst sogar vollständig unterbunden und/oder verhindert werden.

Die Aktivsubstanz der Formulierung (sowie auch in entsprechender Weise des aus der Formulierung erhaltenen Prozesshilfsmittels) ergibt sich allgemein aus dem Gehalt der Formulierung bzw. des Prozesshilfsmittels, der nicht Wasser bzw. sonstiges Lösungsmittel ist. Die Aktivsubstanz der Formulierung und in entsprechender Weise des aus der Formulierungen erhältlichen Prozesshilfsmittels umfasst allgemein wie ausgeführt ein nichtionisches Tensid, vorzugsweise ein Alkoxylat, insbesondere ein ethoxyliertes und/oder propoxliertes Alkoxylat, besonders bevorzugt ein Ethylen-Propylenblockcopolymer, insbesondere vorzugsweise mit einer Molekülmasse von weniger als 100000 g/mol, bevorzugt weniger als 75000 g/mol, wobei eine bevorzugte Untergrenze der Molekülmasse bei 200 g/mol liegt, und eine Metallseife sowie vorzugsweise ein anionisches Tensid. Alternativ oder zusätzlich kann das nichtionische Tensid auch als Polymer eines Alkohols, insbesondere als Polymer eines Alkanols, vorzugsweise als Polymer eines mehrwertigen Alkanols, beispielsweise als Polypropylenglycol, und/oder als Polyether ausgestaltet sein.

Das nichtionische Tensid wirkt dabei als Filmbildner, der zusammen mit Wasser bei der Herstellung des Prozesshilfsmittels aus der Formulierung eine Matrix darstellt, in welchen die Trennkörper bzw. Abstandshalter eingebettet sind, und somit zur Ausbildung eines Trennmittelfilms dient. Vorzugsweise ist das nichtionische Tensid so ausgebildet, dass es eine gute Filmbildung ermöglicht und gleichzeitig in Bezug auf das Polymerprodukt, beispielsweise die Gummimischung, inert im Sinne der vorliegenden Offenbarung ist, also keine negativen Auswirkungen auf die applikationsrelevanten Eigenschaften des hergestellten Polymers, der Gummimischung und/oder Elastomers hat.

Unter einer Metallseife werden im Rahmen der vorliegenden Offenbarung Salze der Carbonsäuren, demnach auch Salze von Fettsäuren, Harz- und Naphthensäuren, mit Metallen bezeichnet. Metallseifen können in wasserlöslich und wasserunlöslich unterschieden werden. Wasserlösliche Metallseifen werden oft auch nur als Seifen bezeichnet. Das gilt insbesondere für die wasserlöslichen Fettsäuresalze mit Natrium- und Kalium-Ionen, die auch als Seifen bezeichnet werden.

Unter einer Fettsäure wird allgemein eine zumeist unverzweigte aliphatische Monocarbonsäure verstanden. Harzsäuren sind eine heterogene Gruppe von organischen Säuren, welche beispielsweise in natürlichen Harzen vorkommen. Naphthensäuren werden hier als Carbonsäuren umfassend wenigstens eine Cyclopentan- und/oder Cyclohexangruppe mit wenigstens einem Alkylsubstituenten verstanden. Diese Gruppen von Carbonsäuren können im Rahmen der vorliegenden Offenbarung auch allgemein als "seifenbildende Carbonsäuren" bezeichnet werden.

Unter einer wasserlöslichen Metallseife wird im Rahmen der vorliegenden Offenbarung ein Alkalisalz einer der vorgenannten Carbonsäuren, insbesondere ein Natrium- und/oder Kaliumsalz einer der vorgenannten Carbonsäuren, also beispielsweise einer Fettsäure, verstanden oder eine Mischung dieser Stoffe. Die wasserlösliche Seife kann auch als Alkaliseife bezeichnet werden. Insbesondere umfasst der Begriff der wasserlöslichen Seife ein Natrium- und/oder Kaliumsalz einer Fettsäure, beispielsweise ein Natrium- und/oder Kaliumstearat und/oder ein Natrium- und/oder Kaliumoleat oder Mischungen hiervon.

Stearate gehören zu der Gruppe der Metallseifen und stellen im Rahmen der vorliegenden Offenbarung die Salze von ausgewählten Fettsäuren dar. Unter einem Stearat werden im Rahmen der vorliegenden Offenbarung insbesondere allgemein Salze der Alkansäuren Margarinsäure, Palmitinsäure und/oder Stearinsäure verstanden. Ein Stearat umfasst somit ein Salz der Hexandecansäure (n-Hexadecansäure), der Heptadecansäure (n-Heptadecansäure), der Octadecansäure (n-Octadecansäure) und/oder deren Mischungen. Vorzugsweise enthält ein Stearat als Hauptbestandteil ein Salz der Octadecansäure, wobei verstanden wird, dass wenigstens 10 Gew.-%, vorzugsweise wenigstens 20 Gew.-% und vorzugsweise mehr als 50 Gew.-% des Stearats als Salz der Octadecansäure ausgebildet ist. Zumeist finden die im Stearat enthaltenen Alkansäuren in Kombination mit unterschiedlichen Metallen wie Calcium, Zink, Magnesium, Natrium, Aluminium und Lithium Einsatz. Dann spricht man unter anderem von Calciumstearat, Zinkstearat, Magnesiumstearat, Natriumstearat, Aluminiumstearat und Lithiumstearat. Calciumstearat in technischer Qualität kann neben Calciumstearat häufig auch andere Calciumsalze von höheren Fettsäuren, zum Beispiel Calciumpalmitat, enthalten.

Dies gilt in entsprechender Weise auch für die weiteren Metallstearate. Mit anderen Worten kann die vorstehende Systematik auch dazu verwendet werden, andere Metallstearate zu beschreiben.

Alle Pulverkomponenten zeichnen sich durch Korngrößen aus, die spezifisch so gewählt wurden, dass sich das Endprodukt, an dem die Pulverkomponenten einen Anteil von 40 - 70 Gew.%, bevorzugt 45 - 65 Gew.% und besonders bevorzugt von 52 - 60 Gew.% , auch aufgrund der spezifischen Korngröße in Wasser dispergieren lässt, ohne, dass die Wassertemperatur über eine Temperatur von 5°C erhöht werden muss.

Nach einer Ausführungsform kann vorgesehen sein, dass die Formulierung und/oder das Prozesshilfsmittel eine biozidische Komponente umfasst, welche die Topfzeit und/oder die Standzeit der Formulierung und/oder des Prozesshilfsmittels erhöht.

Die Formulierung liegt dabei sowohl als im Rahmen der Offenbarung wasserfreie Formulierung (also höchstens 10 Gew.-% Wasser) vor als auch gleichzeitig als dennoch verschiebbare und vorzugsweise sogar fließfähige Masse, die im weiteren Verlauf, insbesondere nach dem Versand, beim Endanwender einem Gebinde beispielsweise mittels eines handelsüblichen Fassentleerungssystem aus dem Liefergebinde entnommen und entsprechend in ein Prozesshilfsmittel überführt werden kann, ohne dass im optimalen Fall das Risiko einer Bildung von Stäuben oder einer Staubentwicklung durch die Entnahme und Weiterverarbeitung gegeben ist. In jedem Fall ist eine solche Bildung von Staub deutlich reduziert. Die Formulierung hat auch den Vorteil, dass auf diese Weise der Wassergehalt recht gering ist, und trotz dem sehr geringen Wassergehalt aber dennoch ein Stauben des Produkts, also der Formulierung, vermieden wird oder zumindest vermindert wird. Dies kann dadurch erreicht werden, dass das nichtionische Tensid als Fließhilfe wirken und so bereits selbst eine Staubbildung mit verhindern bzw. zumindest vermindern kann. Somit ist auf diese Weise auch die Verminderung der Staubbelastung in der Produktion und dadurch die Reduzierung der gesundheitlichen Belastung von mit der Verarbeitung betrauten Mitarbeitern durch die Formulierung dadurch weitgehend durch sachgemäße Verwendung der Formulierung nach der Offenbarung gegeben.

Unter einer Fließhilfe oder einem Fließhilfsmittel wird im Rahmen der Offenbarung eine Komponente verstanden, welche die Fließfähigkeit eines Stoffgemischs, wie beispielsweise einer Formulierung nach der Offenbarung, verbessert, also beispielsweise die Viskosität einer solchen Formulierung verringert. Im Rahmen der vorliegenden Offenbarung können insbesondere nichtionische Tenside diese Funktion erfüllen, wie beispielsweise ein Alkoxylat, insbesondere ein ethoxyliertes und/oder propoxliertes Alkoxylat, besonders bevorzugt ein Ethylen-Propylenblockcopolymer, insbesondere vorzugsweise mit einer Molekülmasse von weniger als 100000 g/mol, bevorzugt weniger als 75000 g/mol, wobei eine bevorzugte Untergrenze der Molekülmasse bei 200 g/mol ist. Alternativ oder zusätzlich kann die Fließhilfe auch ausgestaltet sein als ein als basierend auf einem Polymer eines Alkohols, insbesondere als Polymer eines Alkanols, vorzugsweise als Polymer eines mehrwertigen Alkanols, beispielsweise als Polypropylenglycol, und/oder als Polyether.

Gleichzeitig wird durch die Zusammensetzung der Formulierung sichergestellt, dass die spätere Verwendbarkeit und Verarbeitbarkeit der Formulierung bzw. des aus der Formulierung erhaltenen Prozesshilfsmittels sichergestellt sind. Für die spätere Verwendbarkeit und Verarbeitbarkeit sind die sogenannte "Verschiebbarkeit" und ggf. "Fließfähigkeit" für den Endanwender wichtig. Unter der "Verschiebbarkeit" wird dabei im Rahmen der vorliegenden Offenbarung allgemein verstanden, dass eine Substanz beispielsweise mit einem Spatel bewegt werden kann, sich verschieben und umformen lässt. Ist eine Substanz, beispielsweise eine Paste, allerdings weder verschiebbar, noch fließfähig, kann sie beispielsweise nicht mittels üblicher Pumpen gefördert werden, sodass zu einer gezielten Dosierung eine andere Darreichungsform (Tablette o.ä.) notwendig wäre. Bevorzugt sind daher allgemein sowohl verschiebbare als auch fließfähige Produkte, wobei unter Fließfähigkeit im Rahmen der vorliegenden Offenbarung verstanden wird, dass entsprechende Produkte beispielsweise nur durch Schräghalten eines Gefäßes, angetrieben lediglich durch die Schwerkraft, aus diesem Gefäß auslaufen. Die Formulierung nach der Offenbarung ermöglicht das Herstellen solcher sowohl verschiebbarer als auch fließfähiger Prozesshilfsmittel, wobei die Verschiebbarkeit und/oder Fließfähigkeit in Kombination mit der Wasserfreiheit sicherstellt, dass ein hoher Gehalt an Aktivsubstanz nahezu staubbfrei in einem Schritt auf die erforderliche Anwendungskonzentration verdünnt werden kann.

Vorzugweise weist die Formulierung nach einer Ausführungsform eine Brookfield-Viskosität von höchstens 500 Pa*s auf (500000 mPa*s), bevorzugt von höchstens 300 Pa*s. Solche Formulierungen sind im Sinne der vorliegenden Offenbarung verschiebbar, können auch im Sinne der vorliegenden Offenbarung fließfähig sein und mit handelsüblichen Pump- und Fassentleerungssystemen gefördert werden. Dies hat den Vorteil, dass die Formulierung als solches leicht dosierbar und damit gut in vorhandene Produktionslinien integrierbar ist.

Die einzelnen Bestandteile der Formulierung bzw. in entsprechender Weise die Bestandteile der Aktivsubstanz des Prozesshilfsmittels führen dazu, dass auf einfache Weise eine gute Trennwirkung erzielt werden kann.

Hierbei wirkt insbesondere das nichtionische Tensid als eine Komponente, welche, insbesondere bei Vorliegen in Form eines Alkoxylats, besonders bevorzugt als Ethylen-Propylenblockcopolymer, vorzugsweise mit einer Molekülmasse von weniger als 100000 g/mol, bevorzugt weniger als 75000 g/mol, sowohl die Fließfähigkeit der Formulierung sicherstellt, als auch vorzugsweise dazu beitragen kann, dass eine ausreichende Trennwirkung erzielt wird, insbesondere durch Unterstützung der Bildung eines Films des Trennmittels.

Zur Filmbildung trägt auch das vorzugsweise vorhandene anionische Tensid bei, wobei dieses vorzugsweise in einem geringeren Umfang zugegeben wird, da solche anionischen Tenside beim Vorliegen von Kationen der Erdalkalimetalle, beispielsweise als Kationen der Metallseife, unlösliche Niederschläge bilden können. Vorzugsweise beträgt der Gehalt der Formulierung an einem anionischen Tensid zwischen etwa 0,5 Gew.-% und 10 Gew.-%.

Allgemein können die Tenside auch in Form einer Abmischung vorliegen, d.h. dass die Formulierung und in entsprechender Weise das aus der Formulierung hergestellte oder herstellbare Prozesshilfsmittel können allgemein mehr als ein nichtionisches Tensid und/oder mehr als ein anionisches Tensid umfassen. Sofern im Rahmen der Offenbarung auf den Gehalt an einem Tensid angestellt wird, gleich ob nichtionisches oder anionisches Tensid, wird darunter verstanden, dass sich diese Mengenangaben jeweils auf den Gesamtgehalt an nichtionischen bzw. anionischen Tensiden beziehen.

Die Metallseife der Formulierung wirkt im Prozesshilfsmittel schließlich als ein Trennkörper oder als Trennkörperkomponente. Es hat sich gezeigt, dass mit der Formulierung nach Ausführungsformen ein Prozesshilfsmittel erhalten werden kann oder erhalten wird, bei dem die Metallseife wie ausgeführt im Trennmittelfilm, der durch die Abmischung an Tensiden, wie vorstehend ausgeführt, erhalten wird, eingebettet vorliegt. Vorzugsweise kann vorgesehen sein, dass die Metallseife als Stearat ausgebildet ist oder ein solches zumindest umfasst.

Das anionische Tensid bzw. die Tensidabmischung (oder die Abmischung von Tensiden) umfassend anionische Tenside oder aus anionischen Tensiden kann vorteilhaft mit der Metallseife, insbesondere mit einem Stearat, vorzugsweise einem Magnesium-Stearat zusammenwirken, so dass beispielsweise keine nachträgliche Staubwirkung des Prozesshilfsmittels, also beispielsweise nach dem Aufbringen des Films aus dem Prozesshilfsmittels auf eine Polymeroberfläche, eintritt, auch wenn sich Magnesium-Stearate aufgrund ihrer Feinkörnigkeit (Pulver mit geringer mittlerer Partikelgröße) und ihrem geringen Schüttgewicht durch eine hohe Neigung zur Staubbildung auszeichnen, die sich auch in einer sehr geringen Minimum Ignition Energy (MIE): Minimum Ignition Energy (MIE): < 10 < 100<1000 mJ ausdrückt.

Es hat sich gezeigt, dass eine Metallseife, wie Magnesium-Stearat, vorteilhaft ist, weil auf diese Weise die Affinität des Films des Prozesshilfsmittels zur Polymeroberfläche verbessert werden kann, also sich ein besonders gleichmäßiger Film bildet. Die Verwendung einer wasserunlöslichen Metallseife, wie beispielsweise Magnesium-Stearat, in der Formulierung und/oder dem Prozesshilfsmittel nach der Offenbarung ist daher bevorzugt. Gleichzeitig kann die wasserunlösliche Metallseife, beispielsweise Magnesium-Stearat, auch als Entschäumer wirken, also die Schaumbildung des Prozesshilfsmittels zumindest etwas verringern. Allerdings hat sich auch gezeigt, dass eine wasserunlösliche Metallseife, insbesondere Magnesium-Stearat, die Fließfähigkeit der Formulierung negativ beeinflussen kann, insbesondere die Viskosität erhöht.

Auch wenn die wasserunlösliche Metallseife vorzugsweise als Stearat ausgebildet ist, ist die Offenbarung nicht auf solche Ausführungsformen beschränkt. Vielmehr ist es auch möglich und kann je nach genauer Ausgestaltung auch bevorzugt sein, wenn die wasserunlösliche Metallseife alternativ oder zusätzlich als ein anderes Salz einer Carbonsäure ausgebildet, ist, beispielsweise als Salz der Ölsäure (Oleat). Sofern im Rahmen der Offenbarung auf den Gehalt an wasserunlöslicher Metallseife abgestellt ist, wird darunter stets der Gehalt der Summe der von der Formulierung und/oder dem Prozesshilfsmittel bzw. der Aktivsubstanz des Prozesshilfsmittels umfassten wasserunlöslichen Metallseifen verstanden. Entsprechendes gilt auch für den Fall, dass die Formulierung bzw. das Prozesshilfsmittel eine wasserlösliche Seife umfasst.

Nach einer Ausführungsform umfasst die Formulierung weiter wenigstens eine wasserlösliche Seife, vorzugsweise ein Natrium-Stearat. Natrium-Stearat ist ein besonders bevorzugter Bestandteil des Prozesshilfsmittels bzw. der zugrundeliegenden Formulierung (d.h. der Formulierung, aus der das Prozesshilfsmittel erhalten wird) nach der vorliegenden Offenbarung, insbesondere im Zusammenwirken mit der wasserunlöslichen Metallseife. Sie verbessert ebenfalls die resultierende Trennwirkung des Films des Prozesshilfsmittels (also des Films bzw. der Beschichtung bzw. der Schicht, welche/welcher aus der Anwendung des Prozesshilfsmittels resultiert). Anders als die wasserunlösliche Metallseife führt allerdings eine wasserlösliche Seife zumeist zu einer Erhöhung der Schaumbildung, sodass es vorteilhaft sein kann, die wasserunlösliche Metallseife und die wasserlösliche Seife in ihren jeweiligen Gehalten aufeinander abzustimmen.

Bevorzugt sind solche Ausführungsformen, bei welchen die wasserunlösliche Metallseife aus Magnesium-Stearat ausgebildet ist oder Magnesium-Stearat umfasst und die wasserlösliche Seife als Natrium-Stearat ausgebildet ist oder Natrium-Stearat umfasst.

Magnesium-Stearat hat sich nämlich in Versuchen als ein Mittel herausgestellt, welches, wie vorstehend ausgeführt, zu einem gut haftenden, gleichmäßigen Trennfilm beispielsweise auf einer Polymeroberfläche führen kann, also mithin allgemein geeignet ist, einem Prozesshilfsmittel, welches aus der Formulierung hergestellt wird oder werden kann, eine gute Trennwirkung zu verleihen. Dies wird unter anderem auch darauf zurückgeführt, dass Magnesium-Stearat aufgrund seines Schmelzpunktes von 140°C nicht schlagartig, sondern sehr kontinuierlich und damit sehr gleichmäßig erweicht, was der Ausbildung eines hinsichtlich seiner Dicke homogenen Trennfilms zuträglich ist. Auch verringert Magnesium-Stearat als Bestandteil der Formulierung bzw. des Prozesshilfsmittels dessen Neigung zu Schaumbildung. Gleichzeitig wirkt es sich allerdings negativ auf die Fließfähigkeit der Formulierung aus. Durch die Zugabe einer wasserlöslichen Seife, wie beispielsweise von Natrium-Stearat, ist es aber möglich, die Fließfähigkeit des Prozesshilfsmittels einzustellen. Zwar wirkt sich die Zugabe der wasserlöslichen Seife wiederum negativ auf die Schaumbildung aus, führt nämlich allgemein zu einer Erhöhung der Schaumbildungsneigung, jedoch stellt sich im Zusammenwirken der wasserlöslichen Seife und der wasserunlöslichen Metallseife ein guter Kompromiss zwischen Schaumbildungsneigung, der Ausbildung eines Trennfilms mit guter Trennwirkung und der Fließfähigkeit ein. Vorzugsweise kann dies insbesondere in der Kombination von Magnesium- und Natrium-Stearat als Bestandteilen der Formulierung bzw. des aus der Formulierung hergestellten oder herstellbaren Prozesshilfsmittels gesehen werden.

Allgemein ist es aber auch möglich, dass die wasserlösliche Seife beispielsweise alternativ oder zusätzlich zu einem Stearat ein Oleat umfasst oder als Oleat ausgebildet ist. Allerdings können in diesem Fall Stearate bevorzugt sein, weil diese einen möglichst geringen (oder möglichst engen) Schmelzbereich aufweisen (Schmelzbereich deshalb, da die kommerziell erhältlichen Salze von Carbonsäure, wie beispielsweise die Stearate im Allgemeinen, wie vorstehend auch bereits ausgeführt, selten rein vorliegen, sondern häufig als Mischungen unterschiedlicher Salze, beispielsweise umfassend neben Stearaten auch Palmitate o.ä. und daher nicht genau an einem Punkt, sondern über einen Bereich hinweg aufschmelzen). Besonders bevorzugt sind daher für diese Komponente Stearate, welche üblicherweise bei Temperaturen zwischen 110 - 250°C schmelzen.

Insbesondere ist es im Rahmen der vorliegenden Offenbarung bevorzugt, wenn die wasserlösliche Seife als Kationen Natrium-Ionen umfasst oder bei einer Mischung von wasserlöslichen Seifen diese als Natrium-Salze ausgebildet sind. Hierunter wird im Rahmen der vorliegenden Offenbarung allgemein verstanden, dass in diesen Ausführungen Kalium lediglich als unvermeidliche Verunreinigung vorliegt, üblicherweise in einer Konzentration von höchstens 500 ppm, bezogen auf das Gewicht. Dies wird im Rahmen der vorliegenden Offenbarung auch als "technische Reinheit" bezeichnet, bezogen auf den Metallgehalt.

Natrium ist besonders vorteilhaft, weil das entsprechende Ion (Na⁺) einen geringeren Ionenradius als Kalium von etwa 1 Å hat, im Vergleich zum Ionenradius von Kalium (K⁺) von ca. 1,38 Å und daher deutlich mobiler ist und beispielsweise leichter diffundieren kann. Der beschriebene positive Effekt der Verbesserung der Fließfähigkeit der Formulierung sind daher für die Natrium-Salze der seifenbildenden Carbonsäuren, welche im Rahmen der Offenbarung, wie vorstehend bereits erläutert, auch als "Natrium-Seifen" bezeichnet werden können, ausgeprägter als für die Kalium-Seifen.

Der Zusatz von wenigstens einer wasserlöslichen Seife hat darüber hinaus allgemein, ohne Beschränkung auf eine konkrete Ausführung der wasserlöslichen Seife als Stearat und/oder Natrium-umfassend, auch den Effekt, dass eine solche benetzend wirkt und dabei insbesondere eine gute Affinität für Gummimischungen und/oder sonstige organische Polymere, insbesondere Elastomere, aufweist, d.h. sie sorgt für eine gute Benetzung der Oberfläche beispielsweise eines Elastomers durch den Trennfilm. Gleichzeitig wird durch diese Seifen nicht in die Vernetzungsreaktion beispielsweise von Materialien wie Gummimischungen (Vulkanisation) eingegriffen.

Nach einer Ausführungsform umfasst die Formulierung ein wasserunlösliches Carbonsäureamid, wobei vorzugsweise das wasserunlösliche Carbonsäureamid Distearylethylendiamid ist oder umfasst.

Das wasserunlösliche Carbonsäureamid, beispielsweise ein Diamid, vorzugsweise ein Diamid einer oder mehrerer langkettiger Carbonsäuren, vorzugsweise ein Diamid einer langkettigen Alkansäure, insbesondere einer langkettigen unverzweigten, insbesondere langkettigen unverzweigten und gesättigten, Alkansäure, ganz besonders bevorzugt Distearylethylendiamid (auch abgekürzt als EBS), liegt dabei vorzugsweise in Form einer wachsartigen, selbst auch schmelzbaren Komponente vor und kann insbesondere mit der Metallseife und/oder der wasserlöslichen Seife, sofern vorhanden, ebenfalls als Trennkörperkomponente wirken. Bevorzugt weist das wasserunlösliche Carbonsäureamid 35 bis 40 Kohlenstoffatome und/oder eine molare Masse von weniger als 1000 g/mol auf. Dabei kann das wasserunlösliche Carbonsäureamid auch vorteilhaft auf die Schaumbildung wirken, also zu einer Verringerung der Schaumbildung im aus der Formulierung resultierenden Prozesshilfsmittel beitragen. Das wasserunlösliche Carbonsäureamid kann, wie auch vorstehend bereits ausgeführt, insbesondere vorteilhaft ein Diamid sein, vorzugsweise ein Diamid einer langkettigen Carbonsäure, vorzugsweise ein Diamid einer langkettigen Alkansäure, insbesondere einer langkettigen unverzweigten Alkansäure. Eine bevorzugte Ausführungsform des Carbonsäureamids ist das Distearylethylendiamid, welches im Englischen auch häufig als Ethylene-bis(steramid) bezeichnet und als "EBS" abgekürzt wird. Das Distearylethylendiamid ist eine bevorzugte Ausführungsform einer wachsartigen, schmelzbaren Komponente und wirkt besonders gut mit beispielsweise Stearaten zusammen.

In der Verbindung von mechanischen Abstandshaltern, die insbesondere aus dem wasserunlöslichen Carbonsäureamid gebildet sind, und der Metallseife(n), wobei es sich um wasserlösliche Seifen als auch alternativ oder zusätzlich um wasserunlöslische Metallseifen handeln kann, wird daher vorteilhaft eine besonders gute Trennwirkung für das aus der Formulierung resultierende Prozesshilfsmittel und/oder den damit erhaltenen Film (der damit erhaltenen Beschichtung/schicht) ermöglicht und auch dessen Verarbeitbarkeit verbessert.

Bevorzugt sind solche Formulierungen (bzw. in entsprechender Weise aus diesen hergestellte oder herstellbare Prozesshilfsmittel), bei welchen wenigstens eines der folgenden Merkmale vorliegt:
- Das Verhältnis zwischen der Summe des Gehalts an Tensid und der Summe des Gehalts an Metallseifen (also Summe des Gehalts an wasserlöslicher Seife und wasserunlöslicher Metallseife) liegt zwischen 1 : 0,5 und 1 : 2,0. Dies ermöglicht eine gute Trennwirkung bei gleichzeitig guter Benetzung der Polymeroberfläche durch das aus der Formulierung resultierende Prozesshilfsmittel.
- Die Formulierung umfasst ein wasserunlösliches Carbonsäureamid, welches, wie vorher ausgeführt, die Trennwirkung unterstützt und funktional als "Abstandshalter" bezeichnet werden kann. Mit anderen Worten wirkt das wasserunlösliche Carbonsäureamid als Abstandhalter. Das Verhältnis zwischen der Summe des Gehalts an Tensid und der Summe des Gehalts an Carbonsäureamid beträgt zwischen 1 : 0,1 und 1 : 0,6, bevorzugt zwischen 1: 0,155 und 1 :0,4. Dies vermindert die Schaumbildung im aus der Formulierung resultierenden Prozesshilfsmittel besonders vorteilhaft bei einer gleichzeitig guten Benetzung und/oder Haftung des Films aus dem Prozesshilfsmittels auf einer Polymeroberfläche.
- Die Formulierung umfasst ein wasserunlösliches Carbonsäureamid sowie Metallseifen. Diese Komponenten fungieren in dem aus der Formulierung und dann aus dem Prozesshilfsmittel aufgebrachten Trennfilm vornehmlich als Trennkörper bzw. Abstandshalter, die den beschriebenen direkten Kontakt zwischen unterschiedlichen Oberflächen mit unterbinden. Das Verhältnis zwischen den als Fließmittel wirkenden Komponenten, insbesondere den nichtionischen Tensiden, und der Summe des Gehalts an Abstandsbildnern beträgt zwischen 1:1 und 1 : 5, bevorzugt zwischen 1 : 1,5 und 1: 3. Auf diese Weise wird ein guter Kompromiss zwischen der resultierenden Fließfähigkeit der Formulierung und der resultierenden Trennwirkung des Films aus Prozesshilfsmittel bzw. des durch die Applikation des Prozesshilfsmittels erhaltenen Film erzielt.

Nach einer Ausführungsform umfasst die Formulierung bzw. in entsprechender Weise das aus dieser resultierende Prozesshilfsmittel ein wasserlösliches Polymer, wobei das wasserlösliche Polymer eine Cellulose, ein Polyacryl, Polyvinylalkohol, ein Polyethylen, ein Polyurethan, ein Polysaccharid, beispielsweise Xanthan, und/oder ein Melaminharz ist oder umfasst und bevorzugt ein Polyvinylalkohol ist oder umfasst.

Eine Ausgestaltung mit einem wasserlöslichen Polymer kann vorteilhaft für die Filmbildung in der Anwendung des Prozesshilfsmittels sein. Besonders vorteilhaft ist es dabei, wenn das wasserlösliche Polymer ein Polyvinylalkohol ist oder umfasst. Es hat sich gezeigt, dass Polyvinylalkohol (PVA) im Sinne der Offenbarung inert ist, also die erzeugten oder zu erzeugenden Produkte eines Polymers und/oder einer Gummimischung nicht hinsichtlich der Eigenschaften beeinflusst, zumindest nicht störend, sondern lediglich zu einer Trennwirkung führt und/oder lediglich zu einer solchen zumindest beiträgt. Darüber hinaus kann diese Komponente auch in der Form der Formulierung zugefügt werden, dass eine an sich PVA-freie Formulierung in sogenannte wasserlösliche Hüllen (die im Rahmen der vorliegenden Offenbarung auch als Beutel oder Umhüllung oder Umschlag bezeichnet werden können), die beispielsweise für den Transport, die Positionierung und/oder den Schutz vor Chemikalien-Exposition verwendet werden, abgefüllt wird und durch das Auflösen dieser Gebinde bei der Herstellung der Dispersion bzw. Suspension PVA als Komponente mit Funktion in das Prozesshilfsmittel übergeht. Mit anderen Worten umfasst die Formulierung in diesem Fall auch solche Ausführungen, bei welchen beispielsweise die Formulierung in Form eines portionierten Tabs in einer Hülle (oder Beutel oder Umhüllung oder Umschlag) aus PVA-umfassenden, wasserlöslichen Polymer vorliegt. Der Umschlag, die Hülle, Umhüllung oder der Beutel kann eine Verpackung bilden, beispielsweise in der Form, dass der Tab als mit dem wasserlöslichen Polymer verpackt beschrieben werden kann. Eine solche Ausführung kann im Sinne des Handlings besonders bevorzugt sein, weil auf diese Weise der Kontakt eines Anwenders mit sonstigen Substanzen, insbesondere pulverförmigen Substanzen, in nicht-wasser- oder allgemein flüssigkeitsgebundener Form besonders geringgehalten werden kann. In dieser Ausführung ist es insbesondere wichtig, dass die Formulierung nur einen sehr geringen Wassergehalt in den vorstehend genannten allgemeinen Grenzen aufweist, da sonst eine entsprechende und/oder kontrollierte Portionierung nicht möglich ist.

Nach einer Ausführungsform umfasst die Formulierung wenigstens eine anorganische Pulverkomponente, wobei die anorganische Pulverkomponente oder die Summe der anorganischen Pulverkomponenten vorzugsweise höchstens 10 Gew.-%, bezogen auf das Gesamtgewicht der Formulierung, ausmacht. Mit anderen Worten beträgt der Anteil der anorganischen Pulverkomponente oder, im Falle des Vorliegens mehrerer anorganischer Pulverkomponenten, der Anteil der Summe vorzugsweise höchstens 10 Gew.-%, bezogen auf das Gesamtgewicht der Formulierung. Vorzugsweise ist die anorganische Pulverkomponente ausgewählt aus der Gruppe umfassend ein Schichtsilikat oder ein organisch modifiziertes Schichtsilikat, wie Bentonit, Montmorillonit, Smektit, Stevensit, Hectorit, Sepiolith, Talkum, ein Carbonat, beispielsweise CaCO₃, ein Zeolith, ein Kaolin und/oder eine Kieselsäure (auch bekannt als "Silica", Siliziumoxid oder allgemein SiO₂). Eine Pulverkomponente aus anorganischen Phasen oder einer anorganischen Phase oder mehreren anorganischen Phasen, insbesondere anorganischen, insbesondere vorzugsweise anorganischen nichtmetallischen Phasen, wird im Rahmen der Offenbarung auch als Trennelement (oder auch Trennkörperelement), welches auf einer anorganischen Phase beruht und als Pulverkomponente zugegeben werden kann, bezeichnet. Es kann sich dabei insbesondere um Schichtsilikate handeln, wie vorstehend ausgeführt. Sofern auf den Gehalt des Trennelements abstellt wird, gilt hier, wie in entsprechender Weise auch für die weiteren Komponenten, dass für den Fall des Vorliegens mehrerer Trennelemente, welche auf einer anorganischen Phase beruhen, auf den Gesamtgehalt abgestellt wird.

Solche anorganischen Pulverkomponenten wie vorstehend beschrieben sind bekannte und häufig verwendete Bestandteile von Prozesshilfsmitteln, welche eine Trennwirkung aufweisen. Es kann daher möglich sein, diese anorganischen Pulverkomponenten oder zumindest eine anorganische Pulverkomponente der Formulierung und/oder dem Prozesshilfsmittel zuzugeben.

Die vorstehend beispielhaft genannten anorganischen Pulverkomponenten sind teilweise zumindest teilweise kristallin, allerdings können neben kristallinen oder zumindest teilkristallinen Pulverkomponenten auch amorphe Pulverkomponenten (wie beispielsweise Kieselsäure) verwendet werden. Zwar sind diese Pulverkomponenten effektiv hinsichtlich ihrer Trennwirkung, sind als Pulver allerdings auch eine Ursache für eine mögliche Staubbildung. Daher ist ihr Einsatz in einer Formulierung nach Ausführungsformen zwar prinzipiell möglich, aber allgemein nicht bevorzugt. Die bis auf unvermeidbare Gehalte vorhandene Wasserfreiheit des Prozesshilfsmittel bzw. der Formulierung sowie die Wahl des nichtionischen Tensids (beispielsweise eines Blockpolymer)s sind aber wichtige Voraussetzungen dafür, dass anorganische Pulverkomponenten, die zum Exfolieren neigen, bedenkenlos bzw. ohne Zögern zugesetzt werden können. Die Lagerstabilität und Haltbarkeit des Prozesshilfsmittels ist dadurch nicht eingeschränkt oder gefährdet. Allerdings kann gerade in einer Kombination der Ausführung der Formulierung in Form eines vorkonfektionierten Tabs mit einer Hülle (oder Beutel oder Umhüllung) aus oder umfassend PVA sowie einem Gehalt an einer anorganischen Pulverkomponente eine bevorzugte Ausführungsform liegen. Denn hier wird dann die staubende Komponente für den Anwender unschädlich eingebunden. Allerdings lassen sich die Füllstoffe oder Rheologieaddtive auch so einarbeiten und so in der Struktur des Prozesshilfsmittels (s. bspw. Rolle von Na-Oleat, Rolle von Blockpolymere) fixieren, dass schwarze, ungefärbte Trennfilme erhalten werden, die keinen Abrieb und somit auch keine Staubbildung zeigen, selbst wenn Füllstoffe oder Rheologie-Additive in Form von anorganischen Komponenten zugegeben werden. Sollten die Trennfilme als zu transparent und damit zu wenig sichtbar und unauffällig erscheinen, können sie darüber hinaus oder nur durch die Zugabe von eines Farbmittels, beispielsweise durch ein oder mehrere Pigmente, eingefärbt werden. Bei dieser Form von Farbmitteln, vorzugsweise Pigmenten, handelt es sich um Zusätze, die alleine eine bestimmte Färbung durch eine Farbortverschiebung hervorrufen (Delta-E > 1).

Mit anderen Worten betrifft die Offenbarung daher auch ein Erzeugnis umfassend die Formulierung nach einer Ausführungsform sowie eine Hülle (oder einen Beutel oder eine Umhüllung), vorzugsweise aus oder umfassend PVA, wobei besonders vorzugsweise die Hülle die Formulierung zumindest teilweise, vorzugsweise vollständig, umgibt.

Nach einer Ausführungsform umfasst die Formulierung und/oder das Prozesshilfsmittel daher ein Farbmittel, vorzugsweise ein Pigment.

Nach einer weiteren Ausführungsform umfasst die Formulierung und/oder das Prozesshilfsmittel einen Weichmacher.

Im Rahmen der vorliegenden Offenbarung wird unter einem Weichmacher eine Substanz verstanden, die dem Prozesshilfsmittel bzw. der diesem zugrundeliegenden Formulierung zugegeben wird, um eine erhöhte Flexibilität des mittels des Prozesshilfsmittels erzeugten Films (oder der Beschichtung/der Schicht) zu erhalten.

Die Erfinder glauben, dass mit der Verwendung eines geeigneten Weichmachers die gewünschte Antihaft-/Entschichtungs-/Trennwirkung des Prozesshilfsmittelfilms erhalten werden kann, wobei gleichzeitig sichergestellt ist, dass die Eigenschaften des beschichteten Substrats, also beispielsweise des Polymers, nicht negativ beeinflusst werden.

Die Erfinder glauben weiterhin, dass die Zugabe wenigstens eines Weichmachers zur Formulierung/dem Prozesshilfsmittel zu Änderungen der rheologischen Eigenschaften der Formulierung führen kann, ebenso wie zu Änderungen bei der Verarbeitbarkeit der Formulierung bzw. des Prozesshilfsmittels. Beispielsweise könnte es sein, dass mit der Zugabe wenigstens eines Weichmachers gleichzeitig auch die Schaumbildung verringert werden kann, beispielsweise während die Formulierung und/oder das Prozesshilfsmittel gepumpt und/oder auf andere Weise entlang einer Transportstrecke bewegt werden, beispielsweise von einer Anlage zur nächsten transferiert werden. Es hat sich überraschenderweise auch gezeigt, dass, sofern Rückstände eines solchen Weichmacher umfassenden Prozesshilfsmittels oder einer solchen Weichmacher umfassenden Formulierung in Anlagen oder auf Produktionsaggregaten zurückbleiben sollten, dies nicht dazu führt, dass es zu einer Blockierung der Anlage, zu einem Anhaften oder Verkleben von Formen etc. führt. Vielmehr hat sich sogar gezeigt, dass solche Rückstände sogar eine schmierende Wirkung haben können und beispielsweise in einem Transportaggregat, wie einer Pumpe oder Leitungen, als Gleitmittel wirken können.

Es wird vermutet, dass der wenigstens eine Weichmacher die thermoplastischen Eigenschaften eines Polymers oder einer Mischung verschiedener Polymere zu einer niedrigeren Temperatur bzw. hin zu einem niedrigeren Temperaturbereich verschiebt, was dazu führt, dass das entsprechende Polymer oder die entsprechende Polymermischung entsprechend "elastischer" ausgebildet ist. Dies bedeutet mit anderen Worten, dass nach dieser Ausführungsform die Formulierung und/oder das Prozesshilfsmittel und/oder der mittels des Prozesshilfsmittels erzeugte oder erhaltene Film eine erhöhte Flexibilität aufweist, was sich in einer entsprechend guten Enthaftungswirkung des Films auswirkt. Der Weichmacher kann auch die Glasübergangstemperatur eines Polymers oder einer Polymermischung verringern. Dies wird auf die eher kleinen Moleküle eines geeigneten Weichmachers zurückgeführt, die wie ein Trennelement oder Abstandshalter auf molekularer Ebene zu wirken scheinen und Moleküle des Prozesshilfsmittels/der Formulierung bzw. des Films aus dem Prozesshilfsmittel beabstanden.

Nach einer Ausführungsform umfasst der Weichmacher einen Alkohol, insbesondere einen mehrwertigen Alkohol, und/oder einen Ester, und/oder eine Mischung davon. Besonders geeignet sind beispielsweise Sorbitol, Glyzerin, Propylenglycol, Malitol, Mannitol und niedrigmoluklares Polyethylenglycol und/oder Mischungen hiervon. Alle diese vorgenannten Stoffe können, alleine oder in beliebiger Kombination mit einem oder mehreren weiteren der genannten Stoffe, als Weichmacher verwendet werden. Auf diese Weise kann insbesondere die Flexibilität des damit erhaltenen Films aus dem Prozesshilfsmittels eingestellt, insbesondere erhöht werden. Dies führt zu einer verbesserten Trennwirkung und/oder Haftung des Films auf dem Substrat.

Nach einer weiteren Ausführungsform umfasst die Formulierung und/oder das Prozesshilfsmittel keine unlöslichen Partikel eines Polymers.

Die Offenbarung betrifft auch ein Verfahren zum Herstellen einer Formulierung, vorzugsweise einer Formulierung nach einer Ausführungsform. Dieses Verfahren umfasst einen Schritt des Mischens eines nichtionischen Tensids, vorzugsweise eines Alkoxylates, insbesondere eines ethoxylierten und/oder propoxlierten Alkoxylats, besonders bevorzugt eines Ethylen-Propylenblockcopolymers, insbesondere vorzugsweise mit einer Molekülmasse von weniger als 100000 g/mol, bevorzugt weniger als 75000 g/mol, wobei eine bevorzugte Untergrenze der Molekülmasse bei 200 g/mol liegt, und einer Metallseife sowie vorzugsweise eines anionischen Tensids, vorzugsweise mittels eines Verfahrens, welches einen geringen Eintrag an Scherenergie sicherstellt. Dieser geringe Eintrag an Scherenergie ist dadurch einstell- und kontrollierbar, dass die Temperatur des Gemisches aus den Komponenten, aus denen die Formulierung und/oder das Prozesshilfsmittel entstehen soll, nicht mehr als um 30K im Vergleich zur Ausgangstemperatur des Gemisches innerhalb einer Prozessdauer von 40 Minuten, d.h. bis zum Ende des Verfahrens ansteigt. Bei dem Verfahren kann es sich bevorzugt um ein Knetverfahren, einen Kreis-Disslover mit flacher, unstrukturierter oder Doppelsog-Scheibe, einen Pulvermischer handeln, die sowohl kontinuierlich als auch diskontinuierlich betrieben werden können..

Weiterhin umfasst die Offenbarung auch ein Verfahren zum Herstellen eines Prozesshilfsmittels, umfassend die Schritte
- Bereitstellen einer Formulierung nach einer Ausführungsform der Offenbarung und/oder hergestellt oder herstellbar in einem Verfahren nach der Offenbarung,
- Zugeben einer Flüssigkeit, vorzugsweise einer wässrigen Flüssigkeit,
- Eintragen von Scherenergie oder Sicherstellen einer Umwälzung und von Strömungsprofilen, die durch eine Strömung des Mediums an die Behälterwand entstehen, sodass eine Suspension und/oder Dispersion erhalten wird.

Die Offenbarung betrifft damit auch allgemein ein Prozesshilfsmittel, hergestellt oder herstellbar aus einer Formulierung nach einer Ausführungsform der Offenbarung und/oder hergestellt oder herstellbar in einem Verfahren nach der Offenbarung, wobei das Prozesshilfsmittel in einem Verfahren nach der Offenbarung hergestellt oder herstellbar ist.

Der Gehalt an nichtionischem Tensid liegt vorzugsweise im Bereich von 25 Gew.-%. bis 65 Gew.-%, bezogen auf das Gesamtgewicht der Formulierung bzw. auf das Gewicht der Aktivsubstanz im Prozesshilfsmittel.

Der Gehalt an wasserunlöslicher Metallseife liegt im Bereich von 20 Gew.-% bis 45 Gew.-%.

Wenn vom Gehalt einer Komponente gesprochen wird, wird darunter stets der Gesamtgehalt der Komponente verstanden, also für den Fall des Vorliegens mehrerer nichtionischer Tenside der Gesamtgehalt an nichtionischen Tensiden. Dies gilt in entsprechender Weise auch für alle anderen Komponente.

Alle Angaben zu den Gehalten der Komponenten beziehen sich hier stets auf das Gesamtgewicht der Formulierung bzw. auf den Gehalt an Aktivsubstanz im Prozesshilfsmittel. Die Angaben erfolgen dabei in Gew.-%.

Der Gehalt an anionischem Tensid, sofern enthalten, liegt allgemein, ohne Beschränkung auf eine bestimmte Ausführungsform, vorzugsweise im Bereich bis zu 3 Gew.-%, vorzugsweise im Bereich zwischen 0,25 Gew.-% und 3 Gew.-% der Formulierung und/oder des Prozesshilfsmittels.

Sofern enthalten, liegt allgemein, ohne Beschränkung auf eine bestimmte Ausführungsform, der Gehalt der Formulierung und/oder des Prozesshilfsmittels an wasserlöslichem Carbonsäuremid bei vorzugsweise wenigstens 5 Gew.-% und vorzugsweise bei höchstens 15 Gew.-%.

Sofern enthalten, liegt allgemein, ohne Beschränkung auf eine bestimmte Ausführungsform, der Gehalt der Formulierung und/oder des Prozesshilfsmittels, an wasserlöslicher Seife bei vorzugsweise bis 15 Gew.-%, beispielsweise bei wenigstens 5 Gew.-% und bis zu 15 Gew.-%.

Sofern enthalten, liegt der Gehalt der Formulierung und/oder des Prozesshilfsmittels an wasserlöslichem Polymer allgemein, ohne Beschränkung auf eine bestimmte Ausführungsform, bei bis zu einschließlich 5 Gew.-%.

Sofern enthalten, liegt der Gehalt der Formulierung und/oder des Prozesshilfsmittels an Pigment allgemein, ohne Beschränkung auf eine bestimmte Ausführungsform, bei bis zu einschließlich 3 Gew.-%.

### Beispiele

Die Erfindung wird im Folgenden anhand von zwei Zusammensetzungen weiter erläutert. Die Zusammensetzungsangaben beziehen sich auf Gew.-% Aktivsubstanz (bezogen auf das Prozesshilfsmittel) bzw. auf die Formulierung. Hier ist zu beachten, dass die Komponenten zusammengefasst sind und beispielsweise beim nichtionischen Tensid durchaus eine Mischung mehrerer Tenside vorliegen kann. Entsprechendes gilt für die weiteren Komponente.

Wie man der nachfolgenden Tabelle auch entnehmen kann, können bestimmte Substanzen durchaus verschiedene Funktionen erfüllen und beispielsweise gleichzeitig zur Filmbildung beitragen als auch die Trennwirkung des Trennmittels erzeugen bzw. unterstützen.

Wie die nachfolgende tabellarische Übersicht zeigt, lassen sich unter Verwendung der entsprechenden Komponenten Formulierungen herstellen, die die geforderten Eigenschaften gewährleisten. Insbesondere verdeutlich die Gegenüberstellung des Vergleichs- und des Ausführungsbeispiels die hohe Bedeutung des Verhältnisses aus der Summe der Komponenten, die auch die Fließfähigkeit beeinflussen, sowie aus der Summe der Komponenten, die als Abstandshalter, oder auch Abstandsbildner genannt, fungieren. Zu den Komponenten, die zur Summe der Abstandbildner zusammengefasst werden, zählen die Blockpolymere, die wasserlöslichen Seifen sowie auch die wasserunlöslichen Metallseifen und, wie oben bereits beschrieben, die wasserunlöslichen Carbonsäureamide. Das Ethylen-Propylen-Blockcopolymer ist eine Komponente, welche mindestens aus zwei chemisch unterschiedlichen Homopolymer-Ketten (oder Blöcken), die miteinander verknüpft sind, aufgebaut ist und welches aufgrund seiner Amphiphilie sowohl hydrophil (also wasserliebend) als auch lipophil (also fettliebend) agiert. Dieser Komponente kommt hier eine Doppelfunktion zu, denn sie wirkt neben beispielsweise einem geeigneten weiteren nichtionischen Tensid, wie beispielsweise Propylenglykol als "Fließhilfe". Das Verhältnis aus der Summe der Komponenten, deren Funktion als Fließhilfe bezeichnet werden kann, und der Summe der Komponenten, deren Funktion als Abstandsbildner beschrieben wurden, sollte 1: 2,75 betragen, um eine fließfähige Formulierung sicherzustellen.

| Komponente | Funktion | Vergleichsbeispiel | Ausführungsbeispiel |
|---|---|---|---|
| nichtionisches Tensid | Filmbildner | 18 | 42 |
| - Ethylen-Propylen-Blockcopolymer | Filmbildner | 0 | 31 |
| | Abstandshalter | | |
| | Fließhilfe | | |
| Metallseife | | | |
| - Wasserunlösliche Metallseife | Trennkörperkomponente | 63 | 33 |
| | Abstandshalter | | |
| - Wasserlösliche Seife | Trennkörperkomponente | 17 | 12 |
| | Abstandshalter | | |
| Anionisches Tensid | Filmbildner | 4 | 1 |
| wasserunlösliches Carbonsäureamid | Abstandsbildner | 13 | 10 |
| | Trennkörperkomponente | | |
| | Abstandshalter | | |
| wasserlösliches Polymer | Filmbildner | 2,5 | 2,0 |
| anorganische Pulverkomponente | Trennelement | optional | optional |
| | Abstandshalter | | |

Zusammengefasst nach Funktionen ergibt sich die folgende Zusammenstellung für die beiden Zusammensetzungen:

| | Vergleichsbeispiel | Ausführungsbeispiel |
|---|---|---|
| Summe tensidische Komponenten | 22 | 43 |
| Summe anionische Tenside | 4 | 1 |
| Summe Abstandsbildner-Komponenten | 75 | 85 |
| Summe wasserlösliche Polymere | 2,5 | 1,7 |
| Summe Additiv | 1,5 | 1,3 |
| Summe Fließhilfe | 5 | 31 |
| Verhältnis Fließhilfe : Abstandsbildner | 1 : 15 | 1: 2,75 |

Beide aufgeführten Zusammensetzungen unterscheiden sich demnach sehr deutlich in den Anteilen der Komponente, die den Grad der eingangs beschriebenen Fließfähigkeit der Formulierung bestimmt und sicherstellt. Im Vergleichsbeispiel handelt es sich bei dieser Komponente um Propylenglycol, welcher nahezu nur die Verschiebbarkeit und Fließfähigkeit beeinflusst, aber ansonsten - gemäß der Erkenntnisse, die mittels DoE gewonnen wurden - keine weiteren Zieleigenschaften beeinflusst.

Dagegen beinhaltet die Zusammensetzung des Beispiels nach der Offenbarung eine Komponente, die zwar vor allem die Fließfähigkeit der Formulierung sicherstellt, aber auch zur Trennwirkung und Filmbildung beiträgt. Daher ist sie in der Zusammensetzung dieses Beispiels mit einem signifikanten Gehalt vertreten, der nur auf Kosten einer Reduzierung vor allem des Stearat-Anteils erreicht werden konnte. Überraschenderweise führt dies aber nicht zu einer Verschlechterung der Zieleigenschaften Trennwirkung und der Neigung zu Verklebungen der Substratoberfläche in weiteren Verarbeitungsschritten oder als Funktion einer Lagerungsdauer.

## Patentansprüche

1. Formulierung, insbesondere Formulierung für die Herstellung eines Prozesshilfsmittels, wobei die Formulierung ein nichtionisches Tensid, vorzugsweise ein Alkoxylat, insbesondere ein ethoxyliertes und/oder propoxliertes Alkoxylat, besonders bevorzugt ein Ethylen-Propylenblockcopolymer, insbesondere vorzugsweise mit einer Molekülmasse von weniger als 100000 g/mol, bevorzugt weniger als 75000 g/mol, wobei eine bevorzugte Untergrenze der Molekülmasse bei 200 g/mol ist, und/oder ein Polymer eines Alkohols, insbesondere ein Polymer eines Alkanols, vorzugsweise ein Polymer eines mehrwertigen Alkanols, beispielsweise Polypropylenglycol, und/oder Polyether, und eine wasserunlösliche Metallseife, vorzugsweise ein Magnesium- und/oder ein Calcium-Stearat oder Mischungen hiervon, umfasst, wobei die Formulierung höchstens 10 Gew.-% Wasser umfasst, vorzugsweise höchstens 5 Gew.-% Wasser, insbesondere vorzugsweise höchstens 3 Gew.-% Wasser, bezogen auf das Gesamtgewicht der Formulierung.

2. Formulierung nach Anspruch 1, weiter umfassend ein anionisches Tensid.

3. Formulierung nach den Ansprüchen 1 und 2, welche eine Brookfield- Viskosität von höchstens 500000 mPa*s aufweist.

4. Formulierung nach Anspruch 1, 2 oder 3, umfassend ein wasserunlösliches Carbonsäureamid, beispielsweise ein Diamid, vorzugsweise ein Diamid einer oder mehrerer langkettiger Carbonsäuren, vorzugsweise ein Diamid einer langkettigen Alkansäure, insbesondere einer langkettigen unverzweigten, insbesondere langkettigen unverzweigten und gesättigten, Alkansäure, bevorzugt aufweisend 35 bis 40 Kohlenstoffatome und/oder eine molare Masse von weniger als 1000 g/mol, wobei vorzugsweise das wasserunlösliche Carbonsäureamid Distearylethylendiamid ist oder umfasst.

5. Formulierung nach einem der Ansprüche 1 bis 4, weiter umfassend eine wasserlösliche Seife, wobei die wasserlösliche Seife vorzugsweise Natrium-Stearat ist oder umfasst.

6. Formulierung nach einem der Ansprüche 1 bis 5, aufweisend wenigstens eines der folgenden Merkmale:
- Das Verhältnis zwischen der Summe des Gehalts an Tensid und der Summe des Gehalts an Metallseifen (also Summe des Gehalts an wasserlöslicher Seife und wasserunlöslicher Metallseife) liegt zwischen 1 : 0,5 und 1 : 2,0.;
- Die Formulierung umfasst ein wasserunlösliches Carbonsäureamid, welches als Abstandsbildner wirkt, und das Verhältnis zwischen der Summe des Gehalts an Tensid und der Summe des Gehalts an Carbonsäureamid beträgt zwischen 1 : 0,1 und 1 :0,6, bevorzugt zwischen 1: 0,15 und 1 :0,4;
- Die Formulierung umfasst ein wasserunlösliches Carbonsäureamid sowie Metallseifen und das Verhältnis zwischen den als Fließmittel wirkenden Komponenten der Formulierung, insbesondere den nichtionischen Tensiden, und der Summe des Gehalts an Abstandsbildnern beträgt zwischen 1:1 und 1 : 5, bevorzugt zwischen 1 : 1,5 und 1 : 3.

7. Formulierung nach einem der Ansprüche 1 bis 6, umfassend ein wasserlösliches Polymer, wobei das wasserlösliche Polymer eine Cellulose, ein Polyacryl, Polyvinylalkohol, ein Polyethylen, ein Polyurethan, ein Polysaccharid, beispielsweise Xanthan, und/oder ein Melaminharz ist oder umfasst und bevorzugt ein Polyvinylalkohol ist oder umfasst.

8. Formulierung nach einem der Ansprüche 1 bis 7, umfassend wenigstens ein Trennelement, welches auf einer anorganischen Phase beruht und als Pulverkomponente zugegeben werden kann, wobei das Trennelement vorzugsweise höchstens 10 Gew.-%, bezogen auf das Gesamtgewicht der Formulierung, ausmacht.

9. Formulierung nach Anspruch 8, wobei das Trennelement, welches auf einer anorganischen Phase beruht und als Pulverkomponente zugegeben werden kann, ausgewählt ist aus der Gruppe umfassend ein Schichtsilikat oder ein organisch modifiziertes Schichtsilikat, wie Bentonit, Montmorillonit, Smektit, Stevensit, Hectorit, Sepiolith, Talkum, ein Carbonat, beispielsweise CaCO₃, und/oder eine Kieselsäure, ein Zeolith, ein Kaolin.

10. Formulierung nach einem der Ansprüche 1 bis 9, weiter umfassend ein Farbmittel, vorzugsweise ein Pigment.

11. Formulierung nach einem der Ansprüche 1 bis 10, weiterhin umfassend einen Weichmacher.

12. Erzeugnis umfassen die Formulierung nach einem der Ansprüche 1 bis 11 sowie eine Hülle, vorzugsweise aus oder umfassend PVA, wobei besonders vorzugsweise die Hülle die Formulierung zumindest teilweise, vorzugsweise vollständig, umgibt.

13. Verfahren zum Herstellen einer Formulierung, vorzugsweise einer Formulierung nach einem der Ansprüche 1 bis 11, umfassend den Schritt des Mischens eines nichtionischen Tensids, vorzugsweise eines Alkoxylates, insbesondere eines ethoxylierten und/oder propoxlierten Alkoxylats, besonders bevorzugt eines Ethylen-Propylenblockcopolymers, insbesondere vorzugsweise mit einer Molekülmasse von weniger als 100000 g/mol, bevorzugt weniger als 75000 g/mol, wobei eine bevorzugte Untergrenze der Molekülmasse bei 200 g/mol liegt, und einer wasserunlöslichen Metallseife und vorzugsweise eines anionischen Tensids, vorzugsweise mittels eines Knetverfahrens.

14. Verfahren zum Herstellen eines Prozesshilfsmittels, umfassend die Schritte:
- Bereitstellen einer Formulierung nach einem der Ansprüche 1 bis 11 und/oder hergestellt oder herstellbar in einem Verfahren nach Anspruch 13,
- Zugeben einer Flüssigkeit, vorzugsweise einer wässrigen Flüssigkeit,
- Eintragen von Scherenergie oder Sicherstellen einer Umwälzung und von Strömungsprofilen, die durch eine Strömung des Mediums an die Behälterwand entstehen, sodass eine Suspension und/oder Dispersion erhalten wird.

15. Prozesshilfsmittel, hergestellt oder herstellbar aus einer Formulierung nach einem der Ansprüche 1 bis 11 und/oder hergestellt oder herstellbar in einem Verfahren nach Anspruch 13, hergestellt oder herstellbar in einem Verfahren nach Anspruch 14.
